# EUROPEAN PATENT SPECIFICATION

(11) **EP 1 368 955 B1**
(45) Date of publication and mention of the grant of the patent: **27.06.2007**
(21) Application number: 02702622.8
(22) Date of filing: 06.03.2002
(51) Int. Cl.: H04L 29/08, H04M 1/725

(54) **METHOD AND DEVICE FOR ACCESSING FILES STORED IN A MOBILE TERMINAL DEVICE SUPPORTING AN INTERNET PROTOCOL**
VERFAHREN UND VORRICHTUNG ZUM ZUGREIFEN AUF IN EINEM MOBILEN ENDGERÄT GESPEICHERTE DATEIEN MIT INTERNET PROTOKOLL UNTERSTÜTZUNG
PROCEDE ET DISPOSITIF D'ACCES A DES FICHIERS STOCKES DANS UN TERMINAL MOBILE SUPPORTANT UN PROTOCOLE INTERNET

(30) Priority: 15.03.2001 EP 01106582
(43) Date of publication of application: 10.12.2003
(73) Proprietor: Nokia Corporation, 02150 Espoo (FI)
(72) Inventor: NEMETH, Zoltán, 58452 Witten (DE); BAKACAK, Süleyman, 45144 Essen (DE); ZILLIKENS, Frank, 45276 Essen (DE)
(74) Representative: Becker Kurig Straus
(86) International application number: PCT/IB2002/000662
(87) International publication number: WO 2002/076171

(56) References cited:
- EP-A- 0 748 139
- WO-A-00/76172
- WO-A-97/50222
- "WAP-195-WAEOverview;version 29-03-2000" WAP FORUM, 29 March 2000 (2000-03-29), XP002155622

## Description

The present invention relates to mobile terminals or mobile stations in telephone networks supporting an internet protocol, e.g. a wireless application protocol (WAP). It also relates generally to mobile phones supporting an internet protocol. In particular the invention relates to a method and a device for accessing files in mobile phones having no internal file directory structure or file editor.

The growing spread of mobile phones in recent years, with an increasing number of features and services shows the demand for an improvement in mobile telephone technology. The incorporation of the short message service (SMS) does not require a special directory structures or file editors. The progress in chip integration enables further mobile phone services such as the wireless application protocol (WAP), to exchange data with the internet via WAP gateways. Future applications will require even higher data processing power and storage space than actual applications. This leads to the necessity to handle larger and increased directories and files.

A mobile phone having WAP functinality is presented in WO 00176172.

Therefore, there is a need for a method to access files, in order to prevent a waste of mobile terminal resources. As long as mobile phones do not have their own file directory management and file editor this feature will provide an essential benefit.

One object of the present invention is to provide a method and a mobile terminal device to get access to data files in said mobile terminal device.

Another object of the present is to provide a method to transfer, process or edit data files in a mobile terminal device.

This is achieved according to one aspect of the invention by executing a function, e.g. a wireless markup language (WML) script, received from a remote server via an internet protocol, e.g. WAP for accessing the files stored in said mobile terminal device supporting said internet protocol, e.g. said wireless application protocol (WAP).

The internet protocol preferably is a wireless application protocol (WAP), a hypertext transfer protocol (HTTP) or any other protocol.

The function preferably is a script like WML script, JAVA script such as HTML (only executed once by the mobile terminal) or a program (executed many times by the mobile terminal).

The remote server preferably is a service provider, a contents provider or any other service.

By accessing files stored in a mobile phone or mobile terminal without a directory structure, the mobile phone is enabled to transfer or process stored data. The function, e.g. WAP script is a short and simple program executable by a processor within the terminal device.

Preferably the method for accessing files comprises the steps of: selecting a desired service in a terminal device, transferring or accessing the selected service at a remote service provider via internet protocol, re-transferring a script or a program to the terminal device according to the service and executing the script or program by the terminal device to provide the desired service on the terminal device.

By selecting a kind of service, a user can decide between different possible data transactions, and by transferring his selection to a service provider, the user can request the necessary e.g. WML script to contain and later execute the desired service. By re-transferring and executing a WML script in the mobile phone, the user can get access the files, which have been stored without a directory structure.

Preferably the service is a particular file transaction.

This includes that the service is actually interacting with the contents of files stored in the mobile phone. It also includes that the transaction only displays or lists some of or all files contained in the memory of the mobile phone.

Advantageously the file transaction comprises additional WAP transfers with the service provider.

With additional WAP transfers initiated by or with the service provider even complicated and complex transactions can be executed. So a file may be selected, converted and transferred to another device. Each step thereof can even include the transfer of a WML script from the service provider to the mobile terminal.

Advantageously the file transaction is the transfer of a file to a printer.

By transferring the file to a printer, any files, like SMS, or WAP-Pages, E-mails, text and graphic files and so on can be printed.

Preferably the file transaction is the transfer of the file to a file viewer.

A file viewer is a WML script that enables the user to look at files stored in the mobile phone. A file viewer is adapted to list or display the files contained in the memory of the mobile phone.

Advantageously the file transaction is the transfer thereof to a file editor.

A file editor is able to name, rename, copy and delete files. The user may decide which file is to be edited by previously requesting the file viewer.

Preferably the file transaction is a file conversion.

By converting files, the mobile phone is capable to transfer files, e.g. binary data, sound files, or other not WAP compatible files via WAP.

Preferably the file transaction is the attachment of one file to another file.

This feature enables the terminal e.g. to attach digitized voice recordings to an email, or to attach a graphic file to an email. The terminal can transmit a message with an attached voice recording to a service provider to transfer the voice recording by Email, e.g. transmit it to an email address in the internet. This may even enable the transmission of a photo taken with a digital camera and transferred via an interface to the mobile terminal by Email as an electronic postcard.

Preferably the file is a short message- (SM), a text-, an E-mail-, a sound-, a music-, a voice-, a photo-, video-, a binary, or any other type file.

By accessing different files, in combination with the ability to convert the files into other file structures the mobile phone can exchange different data file combinations via WAP without the requirement of a change of WAP standards. This would even enable a mobile phone device to transfer files as voice files via WAP or SMS. Another implementation can be to enable the mobile phone to receive coded music files, in order to use the mobile terminal device as a music player for reproducing sound data.

Advantageously the method for accessing the files, further comprises the step of transferring data contents of the files to a service provider, or to another terminal device via the service provider if this service is supported, or via any other transfer method.

This enables the terminal device to communicate directly or indirectly with the service provider or another terminal device. This feature adapts the system to access a file and send it e.g. via an infrared interface to a printer.

Preferably the files transferred between said service provider and said terminal device contain binary data.

With a binary data structure any file, program, or data can be transferred to and from the mobile terminal device.

Advantageously the binary data is transferred as a string of characters having hexadecimal representation.

By using a string of pairs of characters having hexadecimal representation, 8-bit data words (bytes) can be transferred via WAP, being compatible to any personal computer. This enables the terminal device to communicate to nearly any computer in the World, and exchange any data therewith.

Advantageously the WML script is used to digitize speech.

By digitizing speech via a WML script the mobile terminal is adapted to transfer a digitized speech file to a service provider to convert the speech into a short message (SM) or an email using a speech recognition system. The destination of the SM or email can be entered separately, or be extracted during the voice recognition process from the digitised speech file. The feature of digitizing may even be executed without the use of a WML script, but the digitized voice record file can be selected and transferred with a WML script to a service provider.

Preferably files and scripts are transferred or executed via an external functionality interface (EFI).

By using an external functionality interface to execute scripts, the received scripts can be executed automatically. The user only needs to initiate a service or a transaction, and subsequent transmissions and executions follow automatically. The external functionality interface renders obsolete an internal command directory, an internal command memory and an internal command man/machine interface. This saves mobile terminal device resources. The EFI enables the mobile terminal device to execute commands not included in the command stack of the mobile terminal device. The file access method if applied to EFI can form a new class, e.g. the "file viewer" to access or transfer files by WAP supporting mobile terminal devices.

Advantageously the method for accessing files, further comprises the step of storing a WML script in an accessible memory of said terminal device.

This encompasses to store frequently used WML scripts in the mobile phone. The first entry in this directory is provided by a couple of WML scripts, wherein the first WML script executes the storing of the second. The stored script can then be executed without transmissions via the phone network, saving network resources. The number of stored scripts can be limited to a determined number of preferred services in order to prevent the waste of mobile terminal device resources.

Preferably the method according to any of the preceding claims further comprises the step of recalling said stored WML script from said accessible memory, to execute or re-execute said WML script.

It is to be understood that the invention is preferably applied to mobile phones but can be applied to any WAP supporting mobile terminal device having internal data files.

It is further to be understood, that the method requires additional confirmation and verification steps to guarantee the security and privacy of the user.

According to another aspect of the present invention, a software tool for executing a function, e.g. a wireless markup language (WML) script, received from a remote server via an internet protocol, e.g. WAP for accessing the files stored in said mobile terminal device supporting said internet protocol, e.g. said wireless application protocol (WAP) is provided, which comprises program code means for performing all of the steps of the preceding description when said code means or said program is run on a computer or a network device.

According to another aspect of the present invention, a computer program for executing the steps is provided, which comprises program code means for performing all of the steps of the preceding description when said program is run on a computer or a network device.

According to yet another aspect of the invention, a computer program product is provided, comprising program code means stored on a computer readable medium for carrying out the method for executing the steps of the preceding description is provided, when said program product is run on a computer or a network device.

Preferably, the computer program and the computer program product are distributed in different parts and devices of the network. The computer program and the computer product device run in different devices of the network. Therefore, the computer program and the device executing said computer program have to be different in abilities and source code.

According to another aspect of the invention there is provided a mobile terminal device adapted for accessing files stored therein, wherein said mobile terminal device is supporting an internet protocol, said mobile terminal device being capable of executing a function received from a remote server via said internet protocol for accessing said files. Details of the internet protocol and the fuction can be derived or are similar to the above specification relating to the method according to the present invention.

In the following, the invention will be described in detail by referring to the enclosed drawings in which
Figure 1 shows a message sequence chart illustrating the steps for transferring a file.
Figure 2 shows a mobile phone user interface displaying the text to initiate a file transmission from the mobile phone.
Figure 3 shows an internal structure on a WAP supporting mobile phone terminal.

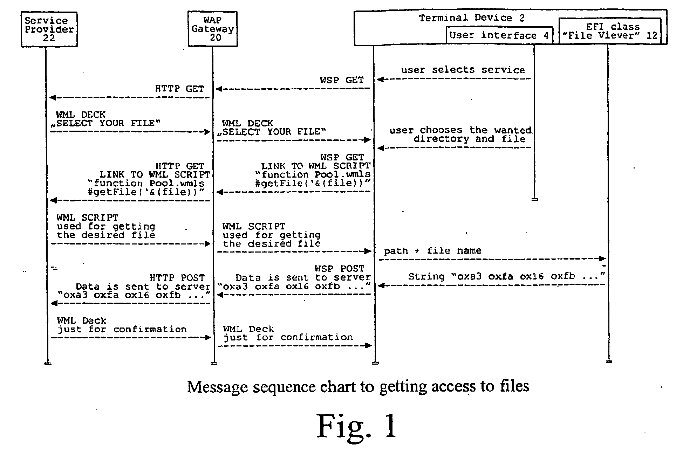

In Figure 1 a message sequence chart is shown which illustrates the steps necessary for the execution of a file transferring service. In the first step the user selects a service via a user interface 4 of a mobile terminal device 2. After confirming the selection the mobile terminal device 2 transfers a Wireless Session Protocol (WSP) GET order to a Wireless Application Protocol (WAP) gateway 20. The WAP gateway 20 converts the WSP GET order to a Hypertext Transfer Protocol (HTTP) GET order. The HTTP GET order is transferred via internet to a service provider 22. The service provider 22 receives the HTTP GET order and selects a Wireless Markup Language (WML) deck from its internal database. The WML deck contains a number of WML cards the mobile terminal device 2 can display to the user. The selected WML deck has the title "SELECT YOUR FILE" and is used to enable the user to select or enter the file and the destination of the file. The service provider knows the origin of the HTTP GET order, and therefore knows the mobile terminal device 2 and all other necessary information.

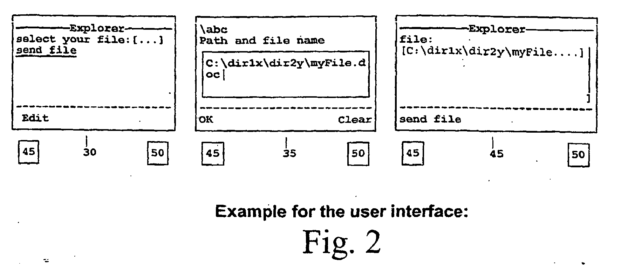

These details can be used e.g. to charge the service or to select a terminal specific WML deck, if no uniform External Functionality Interface (EFI) standard can be established. The WML deck is transferred via the WAP gateway 20 to the mobile terminal device 2. In the mobile terminal device 2 the WML cards in the WML deck are transferred to the user interface 4 to enter a file to be transferred and a destination for the transfer. An example for the displayed data is shown in Fig. 2. After confirmation of the input, the interaction with the user is terminated. All following steps are executed automatically. The mobile terminal device 2 transfers a WSP GET Link to WML SCRIPT "function Pool.wmls'getFile('&(file))" to the WAP gateway 20. The WAP gateway 20 converts the WAP GET order to a HTTP GET order and forwards it to the service provider 22. When receiving the HTTP GET order "function Pool.wmls'getFile('&(file))", the service provider 22 recalls the requested WML SCRIPT to be used to get the desired file and re-transmits it to the WAP gateway 20.

A WML script is a short and simple program automatically executed in the mobile terminal device 2 when received. The WAP gateway 20 forwards the WML SCRIPT to the mobile terminal device 2. The mobile terminal device 2 transfers the path and the file name of it to the internal EFI class file viewer 12. The EFI class file viewer 12 converts the desired file into a string of couples of characters with hexadecimal representation like "oxa3 oxfa ox16 oxfb ..." and transfers it back to the mobile terminal device 2. The string of characters is transferred as WSP POST to the WAP gateway 20. The WAP gateway 20 converts the WSP POST to a HTTP POST and forwards it to the service provider 22. The service provider 22 converts the string back to a data file or forwards it to another destination (not shown). If the file is forwarded, it may be printed or further processed.

The representation as a couple of two hexadecimal characters enables the system to represent 16²=256 different values, which is the same as a classic binary 8 bit data word 2⁸=256 can represent. So every digital data, file, or program can be transferred from and to the mobile terminal device 2. Finally the service provider 22 transfers a WML deck for confirmation via the WAP gateway 20 back to the terminal device 2.

Figure 2 depicts a mobile phone user interface with a display 30, 35, 40 and two soft keys 45, 50, displaying the text to initiate a file transmission from the mobile phone (not shown). The first display 30 on the right side depicts a first WML card. The WML card matching the right display 30 (based on techniques known in the art) looks as follows:

```
 <wml>
  <card id = "card1 title = "Explorer" >
  <p
   <br/> select your file: < input type= "text" title= "path and file name" name= "file"
 value=""/>
      <anchor title = "send file">
      send file
         <go href= "functionPool.wmls#getFile(#&(file)')"/>
      </anchor >
  </p>
 </card>
 </wml>
```

On this display 30 the user can push the left soft key 45 to call in the next WML card. The WML card matching to the display 35 depicted in the middle, enables the user to input a path and a file name. The input is executed via an alphanumeric keypad (not shown) or via a coded numeric keypad (not shown), as in the case of short messages. The input can be edited with the right soft key 45 and is terminated with the left soft key 50. The termination calls in the next WML card, as depicted in the display 40, wherein the user can confirm the input with the right soft key 45 to start the data exchange with the service provider. This method for file transfer may be even possible between different terminal devices. It can be possible to request a file from another terminal device, for example a telephone book, or a music file from a terminal device at home. This method can be used to access files in exchangeable storage media, as they where used e.g. in mp3 players.

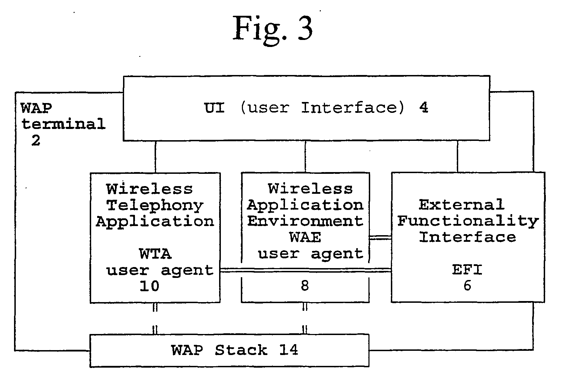

In Figure 3 a block diagram depicts an internal structure of a wireless application protocol (WAP) supporting mobile terminal device 2, showing a version of a hardware structure for the execution of the file access method according to the present invention. An application environment within the WAP mobile terminal 2 consists of several components of which the external functional interface EFI 6 is one. The EFI 6 is positioned as the terminal component that interacts with the wireless application environment (WAE) user agent 8 and the wireless telephone application (WTA) user agent10. Generally, EFI 6 should be considered similar to WTA 10 public functions in its position towards WAE 8. EFI has the same rights to use the user interface UI 4 and communication capabilities as WTA 10 and WAE 8. However it is here not illustrated in detail how EFI 6 is using those capabilities. The primary purpose of EFI 6 is to provide access to external functionality. The functionality is 'external' when it is not standard functionality of WAE 8, WTA 10 or WAP stack 14. Whether such functionality resides in or outside of the terminal or whether the functionality is permanently or only temporarily available is not important.

This application presents the implementation and embodiments of the present invention with the help of examples. It will be appreciated by a person skilled in the art that the present invention is not restricted to details of the embodiments presented above, and that the invention can also be implemented in other form without deviating from the characteristics of the invention. The embodiments presented above should be considered illustrative, but not restricting. Thus the possibilities of implementing and using the invention are only restricted by the enclosed claims. Consequently the various options of implementing the invention as determined by the claims, including the equivalent implementations, also belong to the scope of the invention.

## Claims

1. Method for accessing files stored in a mobile terminal device (2) supporting an internet protocol, wherein said mobile terminal device (2) executes a markup language (ML) script received from a remote server via said internet protocol for accessing said files.

2. Method according to claim 1, wherein said Internet protocol is a wireless application protocol (WAP) or a hypertext transfer protocol (HTTP).

3. Method according to one of the preceding claims, wherein said remote server is a service provider or a contents provider

4. Method according to one of the preceding claims, comprising the steps of:
- selecting a desired service in said terminal device (2);
- transferring said selected service to said service or content provider (22) via an internet protocol;
- re-transferring a script or a program to said terminal device (2) according to said service;
- executing said script by said terminal device (2) to provide said service on said terminal device (2).

5. Method according to claim 4, wherein said service is a particular file transaction.

6. Method according to claim 5, wherein the particular file transaction comprises additional Internet protocol transfers with said service provider.

7. Method according to claim 5 or 6, wherein said file transaction is the transfer of a file to a printer.

8. Method according to claim 5 or 6, wherein said file transaction is the transfer of the file to a file viewer.

9. Method according to claim 5 or 6, wherein said file transaction is the transfer to a file editor.

10. Method according to claim 5 or 6, wherein said file transaction is a file conversion.

11. Method according to claim 5 or 6, wherein said file transaction is the attachment of one file to another file.

12. Method according to anyone of claims 1 to 11, wherein said file is a short message- (SM), a text-, an E-mail-, a sound-, a music-, a voice-, a binary, or any other type file.

13. Method according to anyone of the preceding claims, further comprising the step of transferring the data contents of the files of said terminal device to said service provider.

14. Method according to anyone of the preceding claims, wherein the files transferred between said service provider and said terminal device contain binary data.

15. Method according to claim 14, wherein said binary data is transferred as a string of characters having hexadecimal representation.

16. Method according to anyone of the preceding claims, wherein said script is used to digitize speech data.

17. Method according to any of the preceding claims, wherein files and scripts are transferred or executed via an external functionality interface (EFI) (6).

18. Method according to any of the preceding claims, further comprising the step of storing said script in an accessible memory of said terminal device (2).

19. Method according to any one of the preceding claims, further comprising the step of recalling said stored script from said accessible memory, to execute or re-execute said WML script.

20. Software tool for executing a method for accessing files stored in a mobile terminal device, comprising program code means for carrying out the steps of anyone of claims 1 to 19, when said software tool is implemented in a program run on a Server, mobile terminal device, service Centre or a network device.

21. Computer program product for executing a method for accessing files stored in a mobile terminal device, comprising program code means for carrying out the steps of anyone of claims 1 to 19, when said program is run on a server, a Service Centre or a network device.

22. Computer program product comprising program code means stored on a computer readable medium for carrying out the method of anyone of claims 1 to 19, when said program code means is run on a server, Service Centre, or a network device.

23. Mobile terminal device adapted for accessing files stored therein, wherein said mobile terminal device (2) is supporting an internet protocol, said mobile terminal device (2) being capable of executing a markup language (ML) script received from a remote server via said internet protocol for accessing said files.

24. Mobile terminal device according to claim 23, wherein said internet protocol is a wireless application protocol (WAP) or a hypertext transfer protocol (HTTP).

## Patentansprüche

1. Verfahren zum Zugreifen auf Dateien, die in einem mobilen Endgerät (2) gespeichert sind, das ein Internetprotokoll unterstützt, wobei das mobile Endgerät (2) ein Markup Language (ML) Skript ausführt, das von einem entfernten Server über das Internetprotokoll empfangen wurde, um auf die Dateien zuzugreifen.

2. Verfahren gemäß Anspruch 1, wobei das Internetprotokoll ein Wireless Application Protokoll (WAP) oder ein Hypertext Transfer Protokoll (HTTP) ist.

3. Verfahren gemäß einem der vorstehenden Ansprüche, wobei der entfernte Server ein Dienstanbieter oder ein Inhalteanbieter ist.

4. Verfahren gemäß einem der vorstehenden Ansprüche, umfassend die Schritte
- Auswählen eines gewünschten Dienstes in dem Endgerät (2);
- Übertragen des ausgewählten Dienstes an den Dienstanbieter oder den Inhalteanbieter (22) über ein Internetprotokoll;
- Rückübertragen eines Skripts oder eines Programmes an das Endgerät (2) gemäß dem Dienst;
- Ausführen des Skripts durch das Endgerät (2), um dem Endgerät (2) den Dienst bereitzustellen.

5. Verfahren gemäß Anspruch 4, wobei der Dienst eine bestimmte Dateitransaktion ist.

6. Verfahren gemäß Anspruch 5, wobei die bestimmte Dateitransaktion zusätzliche Internetprotokoll-Übertragungen mit dem Dienstanbieter umfasst.

7. Verfahren gemäß Anspruch 5 oder 6, wobei die Dateitransaktion die Übertragung einer Datei an einen Drucker ist.

8. Verfahren gemäß Anspruch 5 oder 6, wobei die Dateitransaktion die Übertragung einer Datei an einen Dateibetrachter ist.

9. Verfahren gemäß Anspruch 5 oder 6, wobei die Dateitransaktion die Übertragung einer Datei an einen Dateieditor ist.

10. Verfahren gemäß Anspruch 5 oder 6, wobei die Dateitransaktion eine Dateikonvertierung ist.

11. Verfahren gemäß Anspruch 5 oder 6, wobei die Dateitransaktion das Anhängen der Datei an eine andere Datei ist.

12. Verfahren gemäß einem der Ansprüche 1 bis 11, wobei die Datei eine Kurzmitteilungs- (SM), eine Text-, eine E-Mail-, eine Ton-, eine Musik-, eine Spracheine Binär- oder irgendeine andere Datei ist.

13. Verfahren gemäß einem der vorstehenden Ansprüche, weiter umfassend den Schritt - Übertragen der Dateninhalte der Dateien des Endgeräts an den Dienstanbieter.

14. Verfahren gemäß einem der vorstehenden Ansprüche, wobei die zwischen dem Dienstanbieter und dem Endgerät übertragenen Dateien binäre Daten umfassen.

15. Verfahren gemäß Anspruch 14, wobei die binären Daten als eine Folge von Zeichen mit hexadezimaler Darstellung übertragen werden.

16. Verfahren gemäß einem der vorstehenden Ansprüche, wobei das Skript verwendet wird, um Sprachdaten zu digitalisieren.

17. Verfahren gemäß einem der vorstehenden Ansprüche, wobei die Dateien und Skripte über eine externe Funktionalitätsschnittstelle (EFI) (6) übertragen oder ausgeführt werden.

18. Verfahren gemäß einem der vorstehenden Ansprüche, weiter umfassend den Schritt - Speichern des Skripts in einem Speicher des Endgeräts (2), auf den zugegriffen werden kann.

19. Verfahren gemäß einem der vorstehenden Ansprüche, weiter umfassend den Schritt - Abrufen des gespeicherten Skripts von dem Speicher, auf den zugegriffen werden kann, um das WML-Skript auszuführen oder wieder auszuführen.

20. Softwarewerkzeug zum Ausführen eines Verfahrens, um auf Dateien zuzugreifen, die in einem mobilen Endgerät gespeichert sind, umfassend Programmcodemittel zum Ausführen der Schritte irgendeines der Ansprüche 1 bis 19, wenn das Softwarewerkzeug in einem Programm implementiert ist, das auf einem Server, einem mobilen Endgerät, einem Service Center oder einem Netzwerkgerät ausgeführt wird.

21. Computerprogrammprodukt zum Ausführen eines Verfahrens zum Zugreifen auf Dateien, die in einem mobilen Endgerät gespeichert sind, umfassend Programmcodemittel zum Ausführen der Schritte irgendeines der Ansprüche 1 bis 19, wenn das Programm auf einem Server, einem Service Center oder einem Netzwerkgerät ausgeführt wird.

22. Computerprogrammprodukt, umfassend Programmcodemittel gespeichert auf einem computerlesbaren Medium zum Ausführen des Verfahrens irgendeines der Ansprüche 1 bis 19, wenn das Programm auf einem Server, einem Service Center oder einem Netzwerkgerät ausgeführt wird.

23. Mobiles Endgerät, angepasst, um auf darauf gespeicherte Dateien zuzugreifen, wobei das mobile Endgerät (2) ein Internetprotokoll unterstützt, wobei das mobile Endgerät (2) ein Markup Language (ML) Skript, das von einem entfernten Server über ein Internetprotokoll empfangen wurde, ausführen kann, um auf die Dateien zuzugreifen.

24. Mobiles Endgerät nach Anspruch 23, wobei das Internetprotokoll ein Wireless Application Protokoll (WAP) oder ein Hypertext Transfer Protokoll (HTTP) ist.

## Revendications

1. Procédé pour accéder à des fichiers stockés dans un dispositif de terminal mobile (2) supportant un protocole Internet, dans lequel ledit dispositif de terminal mobile (2) exécute un script de langage de balisage (ML) reçu à partir d'un serveur distant à travers ledit protocole Internet pour accéder auxdits fichiers.

2. Procédé selon la revendication 1, dans lequel ledit protocole Internet est un protocole d'application sans fil (WAP) ou un protocole de transfert hypertexte (HTTP).

3. Procédé selon l'une des revendications précédentes, dans lequel ledit serveur distant est un fournisseur de services ou un fournisseur de contenu.

4. Procédé selon l'une des revendications précédentes, comprenant les étapes de :
- sélectionner un service désiré dans ledit dispositif de terminal (2) ;
- transférer ledit service sélectionné audit fournisseur de services ou de contenu (22) à travers un protocole Internet ;
- re-transférer un script ou un programme audit dispositif de terminal (2) selon ledit service ;
- exécuter ledit script par ledit dispositif de terminal (2) pour fournir ledit service sur ledit dispositif de terminal (2).

5. Procédé selon la revendication 4, dans lequel ledit service est une transaction de fichiers particulière.

6. Procédé selon la revendication 5, dans lequel la transaction de fichiers particulière comprend des transferts de protocole Internet supplémentaires avec ledit fournisseur de services.

7. Procédé selon la revendication 5 ou 6, dans lequel ladite transaction de fichiers est le transfert d'un fichier à une imprimante.

8. Procédé selon la revendication 5 ou 6, dans lequel ladite transaction de fichiers est le transfert du fichier à un visualiseur de fichiers.

9. Procédé selon la revendication 5 ou 6, dans lequel ladite transaction de fichiers est le transfert à un éditeur de fichiers.

10. Procédé selon la revendication 5 ou 6, dans lequel ladite transaction de fichiers est une conversion de fichiers.

11. Procédé selon la revendication 5 ou 6, dans lequel ladite transaction de fichiers est le fait de joindre un fichier à un autre fichier.

12. Procédé selon l'une quelconque des revendications 1 à 11, dans lequel ledit fichier est un message court (SM), un texte, un courrier électronique, un son, une musique, une voix, un fichier binaire, ou tout autre type de fichier.

13. Procédé selon l'une quelconque des revendications précédentes, comprenant en plus l'étape de transfert du contenu de données des fichiers dudit dispositif de terminal audit fournisseur de services.

14. Procédé selon l'une quelconque des revendications précédentes, dans lequel les fichiers transférés entre ledit fournisseur de services et ledit dispositif de terminal contiennent des données binaires.

15. Procédé selon la revendication 14, dans lequel lesdites données binaires sont transférées en tant que chaîne de caractères ayant une représentation hexadécimale.

16. Procédé selon l'une quelconque des revendications précédentes, dans lequel ledit script est utilisé pour numériser des données vocales.

17. Procédé selon l'une quelconque des revendications précédentes, dans lequel des fichiers et des scripts sont transférés ou exécutés à travers une interface de fonctionnalité externe (EFI) (6).

18. Procédé selon l'une quelconques des revendications précédentes, comprenant en plus l'étape de stockage dudit script dans une mémoire accessible dudit dispositif de terminal (2).

19. Procédé selon l'une quelconques des revendications précédentes, comprenant en plus l'étape de rappel dudit script stocké à partir de ladite mémoire accessible, pour exécuter ou réexécuter ledit script WML.

20. Outil logiciel pour exécuter un procédé pour accéder à des fichiers stockés dans un dispositif de terminal mobile, comprenant un moyen de code de programme pour exécuter les étapes de l'une quelconque des revendications 1 à 19, lorsque ledit outil logiciel est mis en oeuvre dans un programme exécuté sur un Serveur, un dispositif de terminal mobile, un Centre de Services ou un dispositif de réseau.

21. Programme informatique pour exécuter un procédé pour accéder à des fichiers stockés dans un dispositif de terminal mobile, comprenant un moyen de code de programme pour exécuter les étapes de l'une quelconque des revendications 1 à 19, lorsque ledit programme est exécuté sur un Serveur, un Centre de Services ou un dispositif de réseau.

22. Programme informatique comprenant un moyen de code de programme stocké sur un support lisible par ordinateur pour exécuter le procédé de l'une quelconque des revendications 1 à 19, lorsque ledit moyen de code de programme est exécuté sur un Serveur, un Centre de Services, ou un dispositif de réseau.

23. Dispositif de terminal mobile adapté pour accéder à des fichiers qui y sont stockés, dans lequel ledit dispositif de terminal mobile (2) supporte un protocole Internet, ledit dispositif de terminal mobile (2) étant capable d'exécuter un script de langage de balisage (ML) reçu à partir d'un serveur distant à travers ledit protocole Internet pour accéder auxdits fichiers.

24. Dispositif de terminal mobile selon la revendication 23, dans lequel ledit protocole Internet est un protocole d'application sans fil (WAP) ou un protocole de transfert hypertexte (HTTP).
